# EUROPÄISCHE PATENTSCHRIFT

(11) **EP 0 541 565 B1**
(45) Veröffentlichungstag und Bekanntmachung des Hinweises auf die Patenterteilung: **31.08.1994**
(21) Anmeldenummer: 91911243.3
(22) Anmeldetag: 13.06.1991
(51) Int. Cl.: G01S 15/04, G01S 15/87, G01S 15/52, B60R 25/10

(54) **ULTRASCHALL-ÜBERWACHUNGSSYSTEM FÜR EINEN KFZ-INNENRAUM**
ULTRASONIC MONITORING SYSTEM FOR THE INTERIOR OF A MOTOR VEHICLE
SYSTEME DE SURVEILLANCE AUX ULTRA-SONS DE L'HABITACLE D'UN VEHICULE A MOTEUR

(30) Priorität: 27.07.1990 DE 90114483 U
(43) Veröffentlichungstag der Anmeldung: 19.05.1993
(73) Patentinhaber: SIEMENS AKTIENGESELLSCHAFT, 80333 München (DE)
(72) Erfinder: MÜLLER, Norbert, D-8400 Regensburg (DE); WOLFRAM, Berthold, D-8400 Regensburg (DE)
(86) Internationale Anmeldenummer: EP9101105
(87) Internationale Veröffentlichungsnummer: WO9202831

(56) Entgegenhaltungen:
- DE-A- 2 817 492
- DE-A- 3 003 887
- US-A- 3 805 223
- US-A- 4 929 925

## Beschreibung

Die Erfindung stellt eine Weiterentwicklung des im Oberbegriff des Patentanspruches 1 definierten speziellen Überwachungssystemes dar, das für sich z.B. durch
- DE-A1-28 17 492
vorbekannt ist. Diese bekannte System gestattet bereits, mit relativ wenig Aufwand einen KFZ-Innenraum zu überwachen.
Daneben ist durch
- US-A-3,805,223
ein Ultraschall-Überwachungssystem mit einem einzigen Ultraschallsendeelement und einem einzigen Ultraschallempfangselement - beide Elemente mit mehr oder weniger ausgeprägter Richtcharakteristik - bekannt, welches zur Beobachtung von Fischen bzw. Wassertieren in einem mit Wasser gefüllten Bereich dient - z.B. in einem Aquarium oder in einem Becken. Die Hauptkeulen der Richtcharakteristiken dieser Elemente sind so ausgerichtet angebracht, daß deutlich auch Mehrfachreflexionen über mehrere Begrenzungen des mit Wasser gefüllten Bereiches - also z.B. über die Scheiben des Aquariums - ausgenutzt werden, so daß die Bewegungen der Fische durch das Überwachungssystem nicht nur auf einer geradlinigen Strecke im Wasser, sondern in einem größeren Raum im Wasser automatisch registriert werden können.

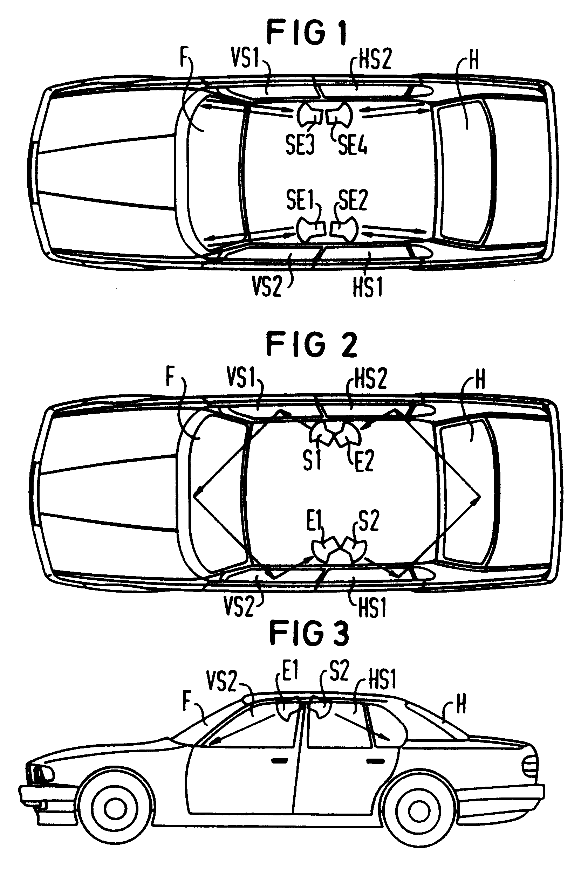

Die Erfindung geht davon aus, daß auch das anschließend beschriebene, in der Figur 1 gezeigte Ultraschall-Überwachungssystem zum Stand der Technik gehört :

Das in der Figur 1 gezeigte KFZ weist unter anderem sechs Scheiben auf, nämlich vier Seitenscheiben VS1, VS2, HS1, HS2, sowie vorne und hinten Querscheiben F, H, nämlich eine Frontscheibe F und eine Heckscheibe H.

An der Innenoberfläche des KFZ-Daches sind in der Nähe der sogenannten B-Holmen, also zwischen den vorderen und hinteren Seitenscheiben VS1 / HS2, VS2 / HS1 vier Radarelemente SE1 bis SE4 für Ultraschallradar angebracht, welche, wie bei Radarsystemen recht häufig ist, jeweils sowohl als Sendeelemente mit ausgeprägter Richtcharakteristik als auch als Empfangselemente mit ausgeprägter Richtcharakteristik dienen.

Die Hauptkeulen der Sende-Richtcharakteristiken und der Empfangs-Richtcharakteristiken aller vier Radarelemente SE1 bis SE4 sind, zumindest weitgehend, jeweils in die gleiche Richtung ausgerichtet. Der KFZ-Innenraum wird hier also sozusagen durch insgesamt vier Sendeelemente und vier Empfangselemente überwacht, von denen aber jedes Sendeelement eine räumliche Einheit mit einem Empfangselement bildet. Die vier Radarelemente SE1 bis SE4 überwacht hier jeweils mehr oder weniger nur in etwa ein Viertel der in der Draufsicht dargestellten KFZ-Innenraumfläche.

Die vier Radarelemente SE1 bis SE4 senden dazu im Betrieb Ultraschallimpulse mit einer bestimmten Frequenz oder mit einem bestimmten Frequenzmuster jeweils gegen einen bestimmten Bereich auf einer Querscheibe F, H jeweils links oder rechts von der Querscheibenmitte, bzw. in benachbarte scheibennahe Bereiche, wobei diese vier Radarelemente, nach ihrer Umsteuerung, jeweils als Empfangselemente vor allem jenen Ultraschall empfangen, den die von diesen Radarelementen selbst in der Sendephase beschallten Bereichen reflektiert werden. Die empfangenen Signale werden in den Empfangselementen in elektrische Signale umgesetzt und danach an eine oder an mehrere Steuerschaltungen weitergeleitet, welche ihrerseits diese Signale auswerten.

Diese vier Radarelemente SE1 bis SE4 überwachen hierbei mehr oder weniger auch die der Hauptachse der Hauptkeule des Ultraschallstrahls benachbarten, zum Innenraumflächen-Viertel gehörenden Seitenscheiben. Innerhalb dieses beschallter Bereiches einschließlich der betreffenden Seitenscheiben treten auch gewisse Reflexionen auf, so daß über die Hauptkeule der Empfangs-Richtcharakteristik dieser vier Radarelemente SE1 bis SE4 auch gewisse Anteile von innerhalb des beschallten Bereiches auch mehrfach reflektierten Ultraschallwellen empfangen und mitausgewertet werden. Diese empfangenen, mehrfach reflektierten Ultraschallwellen werden dann aber jeweils völlig, oder zumindest bevorzugt, vom selben Radarelement (also weniger von den drei anderen Radarelementen) in diesen Bereich abgestrahlt.

Typisch bei dem in der Figur 1 gezeigten Beispiel ist nämlich, daß sich jeweils die Hauptachsen bzw. Hauptkeulen der Sende-Richtcharakteristiken und der Empfangs-Richtcharakteristiken aller Radarelemente SE1 bis SE4 jeweils weitgehend decken. Jedenfalls sind die Hauptachsen der Sende-Richtcharakteristik und der Empfangs-Richtcharakteristik, bei Betrachtung Jedes einzelnen Weges der Radarelemente SE1 bis SE4 nicht absichtlich in ganz unterschiedliche Richtungen ausgerichtet, um gezielt möglichst nur einen solchen Ultraschallstrom zu empfangen, der ursprünglich von einem anderen Sendeelement in ganz andere Richtungen und damit in ganz andere KFZ-Innenraumbereiche abgestrahlt wurde und der absichtlich erst nach mehrfachen Reflexionen, die über große KFZ-Innenraumbereiche verteilt sind, empfangen und ausgewertet wird.

Daneben ist durch
- DE-C2 29 38 969 = EP-B1-26 385
ein Ultraschall-Überwachungssystem bekannt, bei welchem mittels der Speicherung von Echoprofilen und mittels adaptiver laufender Anpassungen des Systemes an solche Bewegungen automatisch jene Störungen eliminiert werden, welche durch an sich harmlose Bewegungen z.B. von Luftschlieren und Ventilatoren u.dgl. hervorgerufen werden.

Die Aufgabe der Erfindung,
- den Aufwand an Sendeelementen und Empfangselementen zur Innenraumüberwachung vermindern zu können, und trotzdem möglichst alle wichtigen Scheibenbereiche und / oder sonstige Bereiche neben den Scheiben (z.B. Ablageflächen für Taschen) mit besonderer Sorgfalt überwachen zu können,
- den Aufwand für zentrale oder dezentrale Steuerschaltungen und deren Verdrahtungen untereinander zur störungsfreien taktgerechten Hin- und Hersteuerung eines jeden einzelnen Radarelements zum alternierenden Betrieb als Sende- und als Empfangselement vermeiden zu können, und
- besonders wenig Ultraschall-Sendeleistung zu benötigen, weil der eine, von keiner Störung beeinflußte Ultraschallstrahl nicht mehr den anderen, eine Störung erfassenden Ultraschallstrahl durch Überlagerungen stört und damit eine besonders hohe Empfindlichkeit der Anordnung erreicht werden kann,

ist durch den im Patentanspruch 1 definierten Gegenstand lösbar.

Die Erfindung beruht also unter anderem besonders auf der Benutzung jeweils (nur !) zweier, für sich getrennter Sendeelemente und Empfangselemente, wobei die beiden Sendeelemente abwechselnd tätig sind. Sie beruht ferner auf der Ausnutzung gezielt von mehrfachen Reflexionen jedes der beiden abgestrahlten Ultraschallströme an mehreren, räumlich weit verteilten Reflexionsflächen hintereinander angenähert in jeweils einer KFZ-Innenraumhälfte oder in noch größeren KFZ-Innenraumabschnitten. Dabei werden also für den Ultraschallstrom so schräge Einfalls- und Ausfallswinkel, besonders auch schräge Einfalls- und Ausfallswinkel an den zu überwachenden Scheiben und Scheibenumgebungen, zur Erzeugung der mehrfachen Reflexionen ausgenutzt, daß auch deswegen zur umfassenden Überwachung bis in wichtige Randbereiche der betreffenden KFZ-Innenraumhälfte hinein bereits ein Sendeelement und ein Empfangselement genügend ausreichen.

Die in den Unteransprüchen definierten zusätzlichen Maßnahmen gestatten, zusätzliche Vorteile zu erreichen. Unter anderem gestatten die Maßnahmen gemäß dem Patentanspruch
2, mit wenig Aufwand an Baumaßnahmen und Energie die gesamten wichtigen Abschnitte der Innenraumes überwachen zu können, nämlich jeweils mit einem einzigen Sendeelement und einem einzigen Empfangselement mit besonders hoher Zuverlässigkeit zumindest in etwa eine Hälfte des KFZ-Innenraumes, und hierbei besonders auch Randbereiche dieser jeweiligen Hälfte, überwachen zu können,
3, die Hauptachsen der Hauptkeulen der Richtcharakteristiken der einzelnen Elemente leicht für sich justieren zu können und die Zuverlässigkeit der Funktionen dieser Elemente zu erreichen, wobei dann diese Elemente an Stellen der Innenraumes angebracht werden, an denen diese Elemente die KFZ-Insassen, z.B. auch beim Ein- und Aussteigen, besonders wenig belästigen,
4, mit wenig Aufwand getrennt für sich die vordere und die hintere Innenraumhälfte, auch deren Scheiben, zu überwachen,
5, mit wenig Aufwand getrennt für sich die linke und die rechte Innenraumhälfte, auch deren Scheiben(bereiche), zu überwachen,
6, zusätzlich innere Abschnitte des Innenraumes, bei sinnvoller Ultraschallstrahlführung auch eine Dachluke (besonders wenn auch an dieser Dachluke der betreffende Ultraschallstrahl reflektiert wird) zu überwachen, sowie bei Bedarf mit besonders wenig Aufwand auch eine starke Reflexion des Ultraschallstrahles in die gewünschte Richtung an einer dann in besonderen Einfallswinkel beschallten Reflexionsfläche zu erreichen,
7, mit besonders geringer Ultraschall-Leistung besonders Randbereiche des KFZ-Innenraumes überwachen zu können,
8, die Sendeleistung des betreffenden Sendeelementes vermindern zu können, weil der betreffende, durch Mehrfachreflexion mittels Schallspiegel übertragene Ultraschallstrahl stärker gebündelt werden kann und der Ultraschallstrahl besonders gut den gewünschte Weg einhält,
9, eine noch zuverlässigere Innenraumüberwachung als mit einem über längere Zeitdauern kontinuierlich abgestrahlten Ultraschall erreichen zu können,
10, auf einfache Weise die Empfangssignale auf alarmrelevante Störungen prüfen und Störungen durch an sich harmlose Bewegungen eliminieren zu können,
11, länger andauernde Änderungen am KFZ-Innenraum, z.B. das Zurücklassen eines Mantels und einer Einkaufstüte im KFZ-Innenraum beim Verlassen des KFZ, zulassen zu können, ohne daß solche an sich starken, aber dann sich nicht mehr bewegenden Innenraumänderungen sofort einen Alarm auslösen,
12, schleichende Änderungen der Ausbreitungsbedingungen im KFZ-Innenraum, die also keine heftigen Änderungen der jeweils auszuwertenden Empfangssignale auslösen, also z.B. durch Temperaturänderungen oder Luftschlieren bewirkte schleichende Änderungen, zulassen zu können, ohne daß solche schleichenden Änderungen sofort einen Alarm auslösen,
13 bis 15, verschiedene Kriterien zur Erkennung von alarmrelevanten Störungen auszunutzen, wobei diese Kriterien zur weiteren Erhöhung der Zuverlässigkeit, mit der eine alarmrelevante Lage erkannt werden kann, auch beliebig miteinander kombiniert angewendet werden können,
16, auf elegante, für sich bekannte Weise ein Kriterium zur Erkennung von alarmrelevanten Störungen auszunutzen,
17, durch Luftschlieren erzeugte Störungen, die z.B. thermisch erzeugt sein können, mit hoher Sicherheit als solche erkennen zu können, also eliminieren zu können, sowie
18, für sich wichtige Bestandteile der Erfindung zu bieten.

Die Erfindung wird anhand der in den Figuren 2 und 3 gezeigten Ausführungsbeispiele der Erfindung weiter erläutert, wobei die Figur 2 eine Draufsicht und die Figur 3 eine Seitenansicht eines KFZ mit einem erfindungsgemäßen Überwachungssystem zeigen.

Diese Figuren betreffen also einen KFZ-Innenraum mit seitlich Seitenscheiben VS1, VS2, HS1, HS2 und mit vorne und hinten Querscheiben F, H, also mit einer Frontscheibe F und einer Heckscheibe H.

In dem KFZ-Innenraum, nämlich an der Innenoberfläche des Daches, sind getrennt voneinander zwei Sendeelementen S1, S2 befestigt, die beide mehr oder weniger ausgeprägt eine Richtcharakteristik aufweisen und die z.B. auf piezoelektrischer Basis arbeiten. Diese Sendeelemente S1, S2 senden im Betrieb zumindest zeitweise Ultraschall mit einer bestimmten Frequenz oder mit einem Frequenzmuster aus.

An derselben Innenoberfläche des Daches, wenn auch mit unterschiedlicher Ausrichtung ihrer Richtcharakteristiken, sind getrennt voneinander und auch getrennt von den Sendeelementen S1, S2 noch zwei Empfangselemente E1, E2 befestigt, die beide ebenfalls mehr oder weniger ausgeprägt eine eigene Richtcharakteristik aufweisen und die z.B. ebenfalls auf piezoelektrischer Basis arbeiten. Diese Empfangselemente E1, E2 empfangen im Betrieb zumindest zeitweise gewisse, und zwar möglichst hohe, Anteile des von den Sendeelementen S1, S2 ausgesendeten Ultraschalles. Jedes der beiden Empfangselemente E1, E2 empfängt also im Betrieb den Ultraschall, der im wesentlichen von nur einem der Sendeelemente ausgesendet wird. Jedes der beiden Empfangselemente ist also jeweils einem der beiden Sendeelemente zugeordnet.

Die Hauptachse der Hauptkeule der Richtcharakteristik jedes der Sendeelemente S1, S2 und die Hauptachse der Hauptkeule der Fichtcharakteristik des dem betreffenden Sendeelementes zugeordneten Empfangselementes weisen aber in unterschiedliche Richtungen. So weist bei dem in der Figur 2 gezeigten Beispiel die betreffende Hauptachse des ersten Sendeelementes S1 gegen die rechte vordere Seitenscheibe VS1 und die Hauptachse des zugeordneten ersten Empfangselementes E1 gegen die linke vordere Seitenscheibe VS2. Außerdem weist bei diesem Beispiel die Hauptachse des zweiten Sendeelementes S2 gegen die linke hintere Seitenscheibe HS1 und die Hauptachse des diesem zweiten Sendeelement 52 zugeordneten zweiten Empfangselementes E2 gegen die rechte hintere Seitenscheibe HS2.

Auf diese Weise empfängt jedes Empfangselement E1 bzw. E2 durch diese besondere Ausrichtung der Hauptkeulen der Richtcharakteristiken besonders deutlich jene Sendesignale der speziell ihnen jeweils zugeordneten Sendeelemente S1 bzw. S2, welche sich durch Mehrfachreflexionen jeweils über mehrere der Scheiben im KFZ-Innenraum ausbreiten, und zwar bei dem in Figur 2 gezeigten Beispiel durch Reflexionen entlang mehr oder weniger dem Umfang des KFZ-Innenraumes : Bei dem in der Figur 2 gezeigten Beispiel breitet sich nämlich der Ultraschall vom ersten Sendeelement S1 über den weg VS1 - F - VS2 zum ersten Empfangselement E1 aus, sowie vom zweiten Sendeelement S2 auf dem Weg HS1 - H - HS2 zum zweiten Empfangselement E2.

Durch diese besondere, sich nicht deckende Ausrichtung der Richtcharakteristiken der Sendeelemente S1, S2 und der Empfangselemente E1, E2 kann also das erste Elementenpaar S1 / E1, also das erste Sendeelement S1 zusammen mit dem ersten Empfangselement E1, bevorzugt in etwa die eine Hälfte des KFZ-Innenraumes überwachen - bei dem in der Figur 2 gezeigten Beispiel ist es die vordere Innenraumhälfte. Das zweite Elementenpaar S2 / E2, also das zweite Sendeelement S2 zusammen mit dem zweiten Empfangselement E2, überwacht hingegen bevorzugt in etwa die andere, hier hintere, Hälfte des KFZ-Innenraumes.

Beide Sendeelemente S1, S2 werden nach ihrer Inbetriebnahme abwechselnd mit Pausen so betreiben, daß jeweils zunächst nur eines der Sendeelemente, z.B. S1, einen Ultraschallimpuls abstrahlt, der danach vom dem diesem Sendeelement S1 zugeordneten Empfangselement E1 empfangen wird, und daß erst nach diesem Empfang das andere Sendeelement S2 einen Ultraschall abstrahlt, der danach von dem diesem Sendeelement S2 zugeordneten Empfangselement E2 empfangen wird. Man benötigt dann besonders wenig Ultraschall-Sendeleistung, weil der eine, von keiner Störung beeinflußte Ultraschallstrahl nicht mehr den anderen Ultraschallstrahl durch Überlagerungen stört, wodurch eine besonders hohe Empfindlichkeit der Anordnung erreicht werden kann.

Der Aufwand an Sendeelementen und Empfangselementen zur Innenraumüberwachung ist also bei der Erfindung besonders klein, auch wenn man bei der Erfindung jeweils mit einem einzigen Sendeelement und einem einzigen Empfangselement mit besonders hoher Zuverlässigkeit in etwa eine Hälfte des KFZ-Innenraumes überwacht, und zwar besonders auch die wichtigen Randbereiche dieser jeweiligen Hälfte. Es genügen zur Überwachung des ganzen Innenraumes also zwei Sendeelemente und, davon räumlich getrennt, zwei Empfangselemente, wobei man alle deren Richtcharakteristiken, bzw. alle Hauptachsen von deren Hauptkeulen, so unterschiedlich ausrichtet, daß bevorzugt gerade die Mehrfachreflexionen, welche über unterschiedlichste reflektierende Flächen hinweg stattfinden, ausgenutzt werden. Gerade durch das erfindungsgemäße Sichnicht-Decken der Hauptkeulen der Richtcharakteristiken, besonders von deren Hauptachsen, innerhalb jedes zusammengehörenden Elementenpaares S1 / E1, S2 / E2 kann erreicht werden, daß wichtige Scheibenbereiche und / oder sonstige Bereiche neben den Scheiben - z.B. auch Ablageflächen für Taschen und Stadtpläne - trotz besonders wenig Aufwand mit besonderer Sorgfalt überwacht werden.

Durch die Erfindung wird aber, im Vergleich zu dem in der Figur 1 gezeigten Stand der Technik, noch weiterer Aufwand vermieden. Jener Stand der Technik erfordert nämlich komplizierte zentrale oder dezentrale Steuerschaltungen und deren Verdrahtungen zum störungsfreien Hin- und Hersteuern eines jeden einzelnen der vier Radarelemente SE1 bis SE4. Diese Art von Steuerschaltungen zum alternierenden Betreiben der Radarelemente SE1 bis SE4 als Sende- und als Empfangselemente ist bei der Erfindung unnötig, weil getrennte Sendeelemente S1, S2 und Empfangselemente E1, E2 angebracht sind, welche unkomplizierter zu betreiben sind und auch weniger Verdrahtungsaufwand zwischen diesen Elementen und der Steuerschaltung erfordern.

Bei dem in den Figuren 2 und 3 gezeigten Beispiel sind die Sendeelemente S1, S2 und die Empfangselemente E1, E2 jeweils an der oder nahe der Innenoberfläche des KFZ-Daches, und zwar jeweils mehr oder weniger im Bereich der sogenannten B-Holmen, also im Bereich der zwischen den vorderen großen Seitenscheiben VS1, VS2 und den hinteren großen Seitenscheiben HS1, HS2 liegenden Holmen, angebracht. Man kann dann die Hauptachsen der Hauptkeulen der Richtcharakteristiken der einzelnen Elemente S1, S2, E1, E2 leicht für sich so justieren, daß zuverlässig die beabsichtigten Mehrfachreflexionen stattfinden. Überdies stören dann diese Elemente S1, S2, E1, E2 kaum noch die späteren KFZ-Benutzer bzw. KFZ-Insassen, z.B. auch nicht beim Ein- und Aussteigen.

Wie besonders die Figur 2 erkennen läßt, kann man mit wenig Aufwand getrennt für sich die alarmrelevanten Bereiche der vorderen und der hinteren Innenraumhälfte, auch deren Scheiben, in erfindungsgemäßer Weise überwachen. Dazu ordnet man die vier Elemente S1, S2, E1, E2, insbesondere die Hauptachsen von ihren Hauptkeulen, im KFZ-Innenraum entsprechend an:

Das erste Sendeelement S1 überwacht zusammen mit dem ersten Empfangselement E1 bevorzugt die alarmrelevanten Bereiche der vorderen Hälfte des KFZ-Innenraumes, z.B. die scheibennahen vorderen KFZ-Bereiche VS1, F, VS2, vgl. die Figur 2. Das zweite Sendeelement S2 überwacht zusammen mit dem zweiten Empfangselement E2 bevorzugt die alarmrelevanten Bereiche der hinteren Hälfte des KFZ-Innerraumes, z.B. die scheibennahen hinteren KFZ-Bereiche VS1, F, VS2. Die Richtcharakteristik des ersten Sendeelements S1 wird mehr oder weniger gegen die eine - z.B. gegen die diesem ersten Sendeelement S1 benachbarte - vordere Seitenscheibe VS1 ausgerichtet. Die Richtcharakteristik des ersten Empfangselements E1 wird hingegen mehr oder weniger gegen die andere - dann die diesem ersten Empfangselement E1 benachbarte - vordere, auf der anderen KFZ-Seite liegende Seitenscheibe VS2 ausgerichtet. Beide Ausrichtungen erfolgen hierbei so, daß sich der vom ersten Sendeelement S1 abgestrahlte Ultraschall, hervorgerufen durch mehrfache Reflexionen, zumindest zu einem erheblichen Teil über die alarmrelevanten Bereiche auf folgendem Wege zum ersten Empfangselement E1 ausbreitet :

Zunächst strömt der vom ersten Sendeelement S1 ausgestrahlte Ultraschall zu jener vorderen Seitenscheibe VS1, gegen welche die Richtcharakteristik des ersten Sendeelementes S1 ausgerichtet ist. Der Ultraschall wird an dieser Seitenscheibe VS1 reflektiert und strömt danach zumindest teilweise weiter zu Bereichen in etwa in der Mitte an und / oder unter der Frontscheibe F, wo er erneut reflektiert wird, - nämlich so, daß er danach zumindest teilweise zur gegenüber liegenden anderen vorderen Seitenscheibe VS2 strömt. Dort wird der Ultraschall nochmals reflektiert und strömt danach zumindest teilweise zum ersten Empfangselement E1 hin, wonach dieses erste Empfangselement E1 das von ihm empfangene Empfangssignal auswertet.

Ähnlich werden die zweiten Elemente S2, E2 zur Überwachung der hinteren Hälfte des KFZ-Innenraumes angewendet :

Die Richtcharakteristik des zweiten Sendeelements S2 wird mehr oder weniger gegen die eine - z.B. gegen die diesem zweiten Sendeelement S2 benachbarte - hintere Seitenscheibe HS1 ausgerichtet. Die Richtcharakteristik des zweiten Empfangselements E2 wird hingegen mehr oder weniger gegen die andere - dann gegen die diesem zweiten Empfangselement E2 benachbarte - hintere, auf der anderen KFZ-Seite liegende Seitenscheibe HS2 ausgerichtet. Diese beiden Ausrichtungen erfolgen so, daß sich der vom zweiten Sendeelement S2 abgestrahlte Ultraschall, hervorgerufen durch mehrfache Reflexionen, zumindest zu einem erheblichen Teil über die alarmrelevanten Bereiche auf folgendem Wege zum zweiten Empfangselement E2 ausbreitet :

Zunächst strömt der vom zweiten Sendeelement S2 ausgestrahlte Ultraschall zu jener hinteren Seitenscheibe HS1, gegen welche die Richtcharakteristik des zweiten Sendeelementes S2 ausgerichtet ist. Nach der Reflexion an dieser Scheibe strömt der Ultraschall danach zumindest teilweise weiter zu Bereichen in etwa in der Mitte an und / oder unter der Heckscheibe H. Nach der dortigen Reflexion strömt der Ultraschall zumindest teilweise weiter zur gegenüber liegenden anderen hinteren Seitenscheibe VS2, wo der Ultraschall nochmals reflektiert wird, so daß er danach zumindest teilweise noch zum zweiten Empfangselement E2 hin strömt. Das von diesem zweiten Empfangselement E2 empfangene Empfangssignal wird schließlich ausgewertet.

Man kann jedoch die Grenzen der zu überwachenden Innenraumhälften auf anders legen. Z.B. kann man - ebenfalls mit besonders wenig Aufwand - getrennt für sich die linke und die rechte Innenraumhälfte, auch deren Scheiben(bereiche), auf folgende Weise überwachen :

Das erste Sendeelement S1 überwacht zusammen mit dem ersten Empfangselement E1 bevorzugt die alarmrelevanten Bereiche der linken Seitenhälfte des KFZ-Innenraumes, z.B. bevorzugt deren scheibennahe KFZ-Bereiche F(linker Bereich), VS2, HS1, H(linker Bereich). Das zweite Sendeelement S2 überwacht hingegen zusammen mit dem zweiten Empfangselement E2 bevorzugt die alarmrelevanten Bereiche der rechten Seitenhälfte des KFZ-Innenraumes, z.B. deren scheibennahe hintere KFZ-Bereiche F(rechter Bereich), VS1, HS2, H(rechter Bereich). Dazu wird die Richtcharakteristik des ersten Sendeelements S1 mehr oder weniger gegen die linke Hälfte einer der Querscheiben, z.B. der Frontscheibe F(linker Bereich), und / oder etwas darunter und / oder etwas darüber, sowie die Richtcharakteristik des ersten Empfangselements E1 mehr oder weniger gegen die linke Hälfte der anderen Querscheibe, also dann der Heckscheibe H(linker Bereich), ausgerichtet. Diese beiden Ausrichtungen erfolgen hierbei in einer Weise, daß sich der vom ersten Sendeelement S1 abgestrahlte Ultraschall, hervorgerufen durch mehrfache Reflexionen, zumindest zu einem erheblichen Teil über alarmrelevante Bereiche auf folgendem Wege zum ersten Empfangselement E1 ausbreitet :

Zunächst strömt der vom ersten Sendeelement S1 ausgesendete Ultraschall zu jener Querscheibe F(linker Bereich), gegen welche die Richtcharakteristik des ersten Sendeelementes S1 ausgerichtet ist. Nach der dortigen Reflexion der Ultraschalles strömt dieser zumindest teilweise zu und / oder entlang zumindest einer der linken Seitenscheiben VS2, HS1 und danach zumindest teilweise zur anderen Querscheibe H(linker Bereich), wo der Ultraschall erneut reflektiert wird. Danach strömt der Ultraschall zumindest teilweise zum ersten Empfangselement E1 hin, wonach dieses erste Empfangselement E1 das von ihm empfangene Empfangssignal auswertet.

Die Richtcharakteristik des zweiten Sendeelements S2 wird hingegen mehr oder weniger gegen die rechte Hälfte einer der Querscheiben, z.B. der Frontscheibe F(rechter Bereich), und / oder etwas darunter und / oder etwas darüber ausgerichtet. Außerdem wird die Richtcharakteristik des zweiten Empfangselements E2 mehr oder weniger gegen die rechte Hälfte der anderen Querscheibe, dann der Heckscheibe H(rechter Bereich), ausgerichtet. Auch diese beiden Ausrichtungen erfolgen in einer Weise, daß sich der vom zweiten Sendeelement S2 abgestrahlte Ultraschall, hervorgerufen durch mehrfache Reflexionen, zumindest zu einem erheblichen Teil über alarmrelevante Bereiche auf folgendem Wege zum zweiten Empfangselement E2 ausbreitet :

Zunächst strömt der vom ersten Sendeelement S1 ausgesendete Ultraschall zu jener Querscheibe, vgl. F/rechts, gegen welche die Richtcharakteristik des zweiten Sendeelementes S2 ausgerichtet ist. Dort wird der Ultraschall reflektiert, wonach dieser zumindest teilweise zu und / oder entlang zumindest einer der rechten Seitenscheiben VS2, HS1 strömt. Danach strömt der Ultraschall zumindest teilweise zur anderen Querscheibe, vgl. H(rechter Bereich), wo er erneut reflektiert wird. Danach strömt der Ultraschall zumindest teilweise zum zweiten Empfangselement E2 hin, wonach dieses zweite Empfangselement E2 das von ihm empfangene Empfangssignal auswertet.

Man kann bei der Erfindung - unabhängig davon, ob man getrennt für sich die rechte und linke, oder die vordere und hintere Hälfte des Innenraumes überwacht - zusätzlich innere Abschnitte des Innenraumes überwachen, ja sogar bei sinnvoller Ultraschallstrahlführung auch eine eventuell vorhandene Dachluke, - wobei man zusätzlich sogar auch an dieser Dachluke vorbeigeleiteten Ultraschallstrahl direkt an der Fläche (Scheibe) der Dachluke reflektieren lassen kann. Dazu kann man die Sendeelemente S1, S2 und die Empfangselemente E1, E2 so im Bereich der Holmen VS2 / HS1, VS1 / HS2 anbringen, daß ihre Richtcharakteristiken jeweils die Grenze bzw. Mittellinie zwischen der linken und der rechten (oder vorderen und hinteren) KFZ-Seitenhälfte kreuzen, bevor sie auf jene Scheiben treffen, auf die sie unmittelbar ausgerichtet sind. Bei Bedarf kann man dann sogar zusätzlich mit besonders wenig Aufwand auch eine besonders starke Reflexion des Ultraschallstrahles in eine gewünschte Richtung erreichen an jener - dann mit besonderem Einfallswinkel beschallten - Reflexionsfläche, gegen welche die Richtcharakteristik des jeweiligen Sendeelementes ausgerichtet ist.

Häufig kann man - jedenfalls in manchen KFZ-Typen - mit besonders geringer Ultraschall-Leistung besonders leicht auch Randbereiche des KFZ-Innenraumes überwachen, wenn die Sendeelemente S1, S2 und die Empfangselemente E1, E2 so im Bereich der B-Holmen zwischen den Scheiben VS2 / HS1, VS1 / HS2 angebracht sind, daß ihre Richtcharakteristiken jeweils ohne Kreuzen der Grenze bzw. Mittellinie zwischen der linken und der rechten (oder vorderen und hinteren) KFZ-Seitenhälfte auf jene Scheiben treffen, auf die sie unmittelbar ausgerichtet sind. Diese Leistungseinsparung ist besonders für solche KFZ-Typen bedeutsam, deren Batterie relativ klein ist, z.B. besonders wenn das ganze KFZ aus Kostengründen nur mit sehr wenig Aufwand gebaut werden soll.

Man kann die Sendeleistung der betreffenden Sendeelemente, also von S1 und / oder S2, auch dadurch vermindern, daß man, nämlich zur Erhöhung der durch Mehrfachreflexion empfangbaren Leistung der Empfangssignale, neben den betreffenden reflektierenden Bereichen von Scheiben, vgl. F, SS1, VS2, HS1, HS2, H, jeweils als Schallspiegel wirkende - z.B. durch entsprechend geformte Plastikoberflächen in der Innenraumverkleidung / Innenraumpolsterung und / oder durch entsprechend geformte besondere Metallflächen gebildete - Reflexionsflächen anbringt, welche dort den Ultraschallstrom in eine gewünschte Richtung mit hohem Wirkungsgrad weiterreflektieren. Dann wird nämlich der betreffende, durch dort mittels des Schallspiegels reflektierte Ultraschallstrahl bei Bedarf zusätzlich stärker gebündelt, über den Umstand hinaus, daß dann der Ultraschallstrahl durch den Schallspiegel besonders gut den gewünschte Weg bzw. die gewünschte Richtung einhält.

Eine noch zuverlässigere Innenraumüberwachung als mit einem während sehr langer Zeitdauern quasi-kontinuierlich abgestrahlten Ultraschall kann man dadurch erreichen, daß beide Sendeelemente S1, S2 im Betrieb so kurze Ultraschallimpulse mit einer bestimmten Frequenz oder mit einem Frequenzmuster abstrahlen, daß nicht nur durch den raschen Wechsel der Aktivierung der Sendeelemente S1, S2 quasi-kontinuierlich der ganze Innenraum des KFZ überwacht wird, sondern daß das System auch Echoprofile registrieren kann. Hierfür gibt es eine ganze Reihe von günstigen Weiterbildungen :

Auf einfache Weise kann man die Empfangssignale auf alarmrelevante Störungen prüfen, indem im KFZ eine oder mehrere Steuerschaltungen angebracht werden, von welchen zumindest ein Teil jeweils den Betrieb der Sendeelemente S1, S2 steuern und von welchen zumindest ein Teil jeweils die von dem Empfangselement E1, E2 empfangenen Empfangssignale auswerten. Die die Empfangssignale auswertenden Steuerschaltung/-en können zusätzlich mit einem Speicher ausgestattet werden, um charakteristische SOLLwerte über die betreffenden Empfangssignale - z.B. über deren Profil - speichern. Eine in der Steuerschaltung zusätzlich angebrachte Vergleicherschaltung kann dann anhand des Speicherinhaltes prüfen, ob die jeweiligen Empfangssignale eine einen Schwellwert überschreitende, also eine alarmrelevante Abweichung aufweisen.

Man kann dann das Überwachungssystem auch besonders störunanfällig machen. Dazu kann man z.B. länger andauernde Änderungen am KFZ-Innenraum, z.B. das Zurücklassen eines Mantels und einer Einkaufstüte im KFZ-Innenraum beim Verlassen des KFZ, zulassen wollen, ohne daß solche an sich starken, aber dann sich nicht mehr bewegenden Innenraumänderungen sofort einen Alarm auslösen. Dazu kann man nach jeder erneuten Inbetriebnahme des Überwachungssystems mittels der Steuerschaltung/-en zuerst jeweils einen oder mehrere neue SOLLwerte aus den dann anfänglich empfangenen Empfangssignalen ableiten und als neue SOLLwerte im Speicher speichern. Dann werden alle späteren, von den Empfangselementen E1, E2 empfangenen Signale mit diesen neuen, dem beim Verlassen des KFZ aktuellen Innenraumzustand verglichen, statt mit einem Normzustand, der solche Willkürlichkeiten wie abgelegte Mäntel und Einkaufstüten nicht berücksichtigen kann.

Auch Störungen durch an sich harmlose Bewegungen, z.B. durch Luftströme und sich drehende Ventilatoren, können dann durch eine entsprechende adaptive laufende Korrektur der gespeicherten SOLLwerte automatisch eliminiert werden. Solche Bewegungen lösen also keinen Alarm aus, wenn die Steuerschaltung/-en zumindest von Zeit zu Zeit - zumindest solange die Empfangssignale nur geringfügig von den gespeicherten SOLLwerten abweichen - aus den neuesten Empfangssignalen einen oder mehrere neue SOLLwerte ableitet und im Speicher für die kommenden, späteren Vergleiche speichert. Vgl. damit auch die oben genannte
- DE-C2-29 38 969 = EP-B1-26 385.
Auch schleichende Änderungen der Ausbreitungsbedingungen im KFZ-Innenraum, die also keine heftigen Änderungen der jeweils auszuwertenden Empfangssignale auslösen, also z.B. schleichende Temperaturänderungen oder schwache Luftschlieren im KFZ-Innenraum, können durch eine solche adaptive Korrektur der gespeicherten SOLLwerte unschädlich gemacht werden, um die Gefahr von Fehlalarmauslösungen zu vermindern. Auch solche schleichenden Änderungen sind also unschädlich, wenn die Steuerschaltung/-en zumindest von Zeit zu Zeit, solange die Empfangssignale nur geringfügig von den gespeicherten SOLLwerten abweichen, aus den neuesten Empfangssignalen einen oder mehrere neue SOLLwerte ableitet und im Speicher für die kommenden, späteren Vergleiche speichert.

Man kann verschiedene Kriterien - nur einzelne davon oder beliebig kombiniert mehrere davon - zur Erkennung von alarmrelevanten Störungen auszunutzen. So kann z.B. die Vergleicherschaltung mittels eines oder mittels mehreren SOLLwerten feststellen, ob sich jeweils eine oder mehrere der Amplituden des Empfangssignales in für Alarmsituationen typischer Weise änderten. Die Vergleicherschaltung kann auch mittels eines oder mittels mehreren SOLLwerten feststellen, ob sich inzwischen eine oder mehrere der Frequenzen des Empfangssignales in für Alarmsituationen typischer Weise änderten. Die Vergleicherschaltung kann auch mittels eines oder mittels mehreren SOLLwerten feststellen, ob sich inzwischen die Laufzeit des Empfangssignales zwischen dem betreffenden Sendeelement und dem betreffenden Empfangselement in für Alarmsituationen typischer Weise änderte.

Man kann aber - für sich alleine, aber auch zusätzlich zu anderen Kriterien - auch den Dopplereffekt als Kriterium zur Erkennung von alarmrelevanten Störungen auszunutzen, indem man im Betrieb zumindest zeitweise den Dopplereffekt ausnutzt bzw. mitausnutzt. Besonders elegant ist dann eine solche Dopplereffektausnutzung möglich, wenn zusätzlich, wie beschrieben, der Ultraschall jeweils impulsweise - statt kontinuierlich - abgestrahlt wird, wenn zumindest ein Teil der für diesen impulsweisen Betrieb vorhin genannten Kriterien zur Erkennung von alarmrelevanten Störungen ausgenutzt werden, und wenn zusätzlich seine oben genannte/-n Steuerschaltung/-en im Betrieb nach Erkennen einer den Schwellwert überschreitenden Abweichung zusätzlich prüft / prüfen, ob auch eine auf dem Dopplereffekt beruhende Abweichung vorliegt. Dadurch kann man z.B. durch Luftschlieren erzeugte Störungen, die z.B. thermisch erzeugt sein können, mit hoher Sicherheit als solche erkennen, also eliminieren.

Die Erfindung umfaßt nicht nur die im KFZ installierte Überwachungsanordnung, sondern auch ihre wichtigen Bestandteile für sich, nämlich die Sendeelemente S1, S2, Empfangselemente E1, E2 und / oder Steuerschaltung/-en, wenn sie für ein oben beschriebenes, erfindungsgemäßes Überwachungssystem bestimmt sind.

### Liste der Bezugszeichen

- E1: Empfangselement
- E2: Empfangselement
- F: Frontscheibe
- H: Heckscheibe
- HS1: hintere Seitenscheibe
- HS2: hintere Seitenscheibe
- S1: Sendeelement
- S2: Sendeelement
- SE1: Sende-/Empfangselement
- SE2: Sende-/Empfangselement
- SE3: Sende-/Empfangselement
- SE4: Sende-/Empfangselement
- VS1: vordere Seitenscheibe
- VS2: vordere Seitenscheibe

## Patentansprüche

1. Ultraschall-Überwachungssystem für einen KFZ-Innenraum mit Seitenscheiben (SV1, SV2, HS1, HS2) und vorne und hinten mit Querscheiben (F, H), also mit einer Frontscheibe (F) und einer Heckscheibe (H), wobei
- zwei Sendeelemente (S1, S2) - z.B. piezoelektrische Kristalle (S1, S2) - , welche im Betrieb zumindest zeitweise Ultraschall mit mehr oder weniger ausgeprägter Richtcharakteristik aussenden, im KFZ-Innenraum und / oder in dessen Begrenzung befestigt sind, und
- die Hauptkeulen der Richtcharakteristiken der Sendeelemente (S1, S2) im KFZ in unterschiedliche Richtungen ausgerichtet sind,
**dadurch** **gekennzeichnet**, daß
- nur zwei Sendeelemente (S1, S2) angebracht sind,
- mindestens ein Empfangselement (E1, E2) - z.B. ebenfalls piezoelektrische Kristalle (E1, E2) - , in der Regel aber mindestens zwei voneinander räumlich getrennte Empfangselemente (E1, E2), im KFZ-Innenraum und / oder an dessen Begrenzung angebracht sind, welche im Betrieb zumindest zeitweise Anteile des ausgesendeten Ultraschalles empfangen,
- die Empfangselemente (E1, E2) nicht zeitweise durch die Sendeelemente (S1, S2) gebildet sind, sondern räumlich von allen Sendeelementen (S1, S2) getrennt sind,
- beide Sendeelemente (S1, S2) nach ihrer Inbetriebnahme abwechselnd mit Pausen so betrieben werden,
° daß jeweils zunächst nur eines der Sendeelemente (z.B. S1) einen Ultraschallimpuls abstrahlt, der danach vom dem diesem Sendeelement (S1) zugeordneten Empfangselement (E1) empfangen wird, und
° daß erst nach diesem Empfang das andere Sendeelement (S2) einen Ultraschall abstrahlt, der danach von dem diesem Sendeelement (S2) zugeordneten Empfangselement (E2) empfangen wird, bevor wieder das eine der Sendeelemente (S1) einen Ultraschallimpuls abstrahlt,
- die Hauptkeulen der Richtcharakteristiken der Sendeelemente (S1, S2) sowie die Hauptkeulen der Richtcharakteristik/-en des/der Empfangselemente/-s (E1, E2) so ausgerichtet sind,
° daß das dem ersten Sendeelement (S1) zugeordnete Empfangselement (E1) besonders deutlich jene Sendesignale des ersten Sendeelements (S1), welche sich durch Mehrfachreflexionen jeweils über mehrere Scheiben (VS1 / VS2) im KFZ-Innenraum ausbreiten, empfängt, und
° daß das dem zweiten Sendeelement (52) zugeordnete Empfangselement (E2) besonders deutlich jene Sendesignale des zweiten Sendeelements (S2), welche sich durch Mehrfachreflexionen jeweils über mehrere Scheiben (HS1 / HS2) im KFZ-Innenraum ausbreiten, empfängt (Figur 2 und 3).

2. Überwachungssystem nach Patentanspruch 1,
**dadurch gekennzeichnet**, daß
- das erste Sendeelement (S1) zusammen mit dem ihm (S!) zugeordneten ersten Empfangselement (E1) bevorzugt mehr oder weniger zumindest die eine Hälfte des KFZ-Innenraumes überwacht, und
- das zweite Sendeelement (S2) zusammen mit dem ihm (S2) zugeordneten zweiten Empfangselement (E2) bevorzugt mehr oder weniger zumindest die andere Hälfte des KFZ-Innenraumes überwacht (Figur 2 und 3).

3. Überwachungssystem nach Patentanspruch 1 oder 2,
**dadurch** **gekennzeichnet,** daß
- die Sendeelemente (S1, S2) und die Empfangselemente (E1, E2) als räumlich voneinander getrennte Elemente jeweils an der oder nahe der Innenoberfläche des KFZ-Daches, und zwar mehr oder weniger im Bereich der zwischen den vorderen Seitenscheiben (VS1, VS2) und den hinteren Seitenscheiben (HS1, HS2) liegenden Holmen (zwischen VS1 / HS2 und VS2 / HS1) angebracht sind.

4. Überwachungssystem nach Patentanspruch 1, 2 oder 3,
**dadurch** **gekennzeichnet,** daß
- das erste Sendeelement (S1) zusammen mit dem ersten Empfangselement (E1) bevorzugt die alarmrelevanten Bereiche der vorderen Hälfte des KFZ-Innenraumes, z.B. die scheibennahen vorderen KFZ-Bereiche (VS1, F, VS2), überwacht,
- das zweite Sendeelement (S2) zusammen mit dem zweiten Empfangselement (E2) bevorzugt die alarmrelevanten Bereiche der hinteren Hälfte des KFZ-Innenraumes, z.B. die scheibennahen hinteren KFZ-Bereiche (VS1, F, VS2), überwacht,
- dazu die Richtcharakteristik des ersten Sendeelements (S1) mehr oder weniger gegen die eine - z.B. gegen die diesem ersten Sendeelement (S1) benachbarte - vordere Seitenscheibe (VS1), sowie die Richtcharakteristik des ersten Empfangselements (E1) mehr oder weniger gegen die andere - dann die diesem ersten Empfangselement (E1) benachbarte - vordere, auf der anderen KFZ-Seite liegende Seitenscheibe (VS2) so ausgerichtet sind, daß sich der vom ersten Sendeelement (S1) abgestrahlte Ultraschall, hervorgerufen durch mehrfache Reflexionen, zumindest zu einem erheblichen Teil auf folgendem Wege ausbreitet :
° zunächst zu jener vorderen Seitenscheibe (VS1), gegen welche die Richtcharakteristik des ersten Sendeelementes (S1) ausgerichtet ist,
° danach zumindest teilweise zu Bereichen an und / oder unter der Frontscheibe (F),
° danach zumindest teilweise zur gegenüber liegenden anderen vorderen Seitenscheibe (VS2), und
° danach zumindest teilweise zum ersten Empfangselement (E1) hin,
wonach dieses erste Empfangselement (E1) das von ihm (E1) empfangene Empfangssignal auswertet, sowie
- die Richtcharakteristik des zweiten Sendeelements (S2) mehr oder weniger gegen die eine - z.B. gegen die diesem zweiten Sendeelement (S2) benachbarte - hintere Seitenscheibe (HS1), sowie die Richtcharakteristik des zweiten Empfangselements (E2) mehr oder weniger gegen die andere - dann gegen die diesem zweiten Empfangselement (E2) benachbarte - hintere, auf der anderen KFZ-Seite liegende Seitenscheibe (HS2) so ausgerichtet sind, daß sich der vom zweiten Sendeelement (S2) abgestrahlte Ultraschall, hervorgerufen durch mehrfache Reflexionen, zumindest zu einem erheblichen Teil auf folgendem Wege ausbreitet :
° zunächst zu jener hinteren Seitenscheibe (HS1), gegen welche die Richtcharakteristik des zweiten Sendeele mentes (S2) ausgerichtet ist,
° danach zumindest teilweise zu Bereichen an und / oder unter der Heckscheibe (H),
° danach zumindest teilweise zur gegenüber liegenden anderen hinteren Seitenscheibe (VS2), und
° danach zumindest teilweise zum zweiten Empfangselement (E2) hin,
wonach dieses zweite Empfangselement (E2) das von ihm (E2) empfangene Empfangssignal auswertet (Figur 2).

5. Überwachungssystem nach Patentanspruch 1, 2 oder 3,
**dadurch** **gekennzeichnet,** daß
- das erste Sendeelement (S1) zusammen mit dem ersten Empfangselement (E1) bevorzugt die alarmrelevanten Bereiche der linken Seitenhälfte des KFZ-Innenraumes, z.B. bevorzugt deren scheibennahe KFZ-Bereiche (F/links, VS2, HS1, H/links), überwacht,
- das zweite Sendeelement (S2) zusammen mit dem zweiten Empfangselement (E2) bevorzugt die alarmrelevanten Bereiche der rechten Seitenhälfte des KFZ-Innenraumes, z.B. deren scheibennahe hintere KFZ-Bereiche (F/rechts, VS1, HS2, H/rechts), überwacht,
- dazu die Richtcharakteristik des ersten Sendeelements (S1) mehr oder weniger gegen die linke Hälfte einer der Querscheiben (F/links) - z.B. der Frontscheibe (F/links), und / oder etwas darunter und / oder etwas darüber, sowie die Richtcharakteristik des ersten Empfangselements (E1) mehr oder weniger gegen die linke Hälfte der anderen Querscheibe (H/links) - dann der Heckscheibe (H/links) - so ausgerichtet sind, daß sich der vom ersten Sendeelement (S1) abgestrahlte Ultraschall, hervorgerufen durch mehrfache Reflexionen, zumindest zu einem erheblichen Teil auf folgendem Wege ausbreitet :
° zunächst zu jener Querscheibe (F/links), gegen welche die Richtcharakteristik des ersten Sendeelementes (S1) ausgerichtet ist,
° danach zumindest teilweise zu und / oder entlang zumindest einer der linken Seitenscheiben (VS2, HS1),
° danach zumindest teilweise zur anderen Querscheibe (H/links), und
° danach zumindest teilweise zum ersten Empfangselement (E1) hin,
wonach dieses erste Empfangselement (E1) das von ihm (E1) empfangene Empfangssignal auswertet, sowie
- die Richtcharakteristik des zweiten Sendeelements (S2) mehr oder weniger gegen die rechte Hälfte einer der Querscheiben (F/rechts) - z.B. der Frontscheibe (F/rechts), und / oder etwas darunter und / oder etwas darüber, sowie die Richtcharakteristik des zweiten Empfangselements (E2) mehr oder weniger gegen die rechte Hälfte der anderen Querscheibe (H/rechts) - dann der Heckscheibe (H/rechts) - so ausgerichtet sind, daß sich der vom zweiten Sendeelement (S2) abgestrahlte Ultraschall, hervorgerufen durch mehrfache Reflexionen, zumindest zu einem erheblichen Teil auf folgendem Wege ausbreitet :
° zunächst zu jener Querscheibe (F/rechts), gegen welche die Richtcharakteristik des zweiten Sendeelementes (S2) ausgerichtet ist,
° danach zumindest teilweise zu und / oder entlang zumindest einer der rechten Seitenscheiben (VS2, HS1),
° danach zumindest teilweise zur anderen Querscheibe (H/rechts), und
° danach zumindest teilweise zum zweiten Empfangselement (E2) hin,
wonach dieses zweite Empfangselement (E2) das von ihm (E2) empfangene Empfangssignal auswertet.

6. Überwachungssystem nach Patentanspruch 4 oder 5, **dadurch** **gekennzeichnet,** daß
- die Sendeelemente (S1, S2) und die Empfangselemente (E1, E2) so im Bereich der Holmen (VS2 / HS1, VS1 / HS2) angebracht sind, daß ihre (S1, S2, E1, E2) Richtcharakteristiken jeweils die Mittellinie zwischen den weitgehend getrennt für sich überwachten (linken und rechten, oder vorderen und hinteren) KFZ-Seitenhälfte kreuzen, bevor sie auf jene Scheiben treffen, auf die sie unmittelbar ausgerichtet sind.

7. Überwachungssystem nach Patentanspruch 4 oder 5,
**dadurch** **gekennzeichnet,** daß
- die Sendeelemente (S1, S2) und die Empfangselemente (E1, E2) so im Bereich der Holmen (VS2 / HS1, VS1 / HS2) angebracht sind, daß ihre (S1, S2, E1, E2) Richtcharakteristiken jeweils ohne Kreuzen der Mittellinie zwischen den weitgehend getrennt für sich überwachten (linken und rechten, oder vorderen und hinteren) KFZ-Seitenhälfte auf jene Scheiben treffen, auf die sie unmittelbar ausgerichtet sind (Figur 2).

8. Überwachungssystem nach einem der vorhergehenden Patentansprüche,
**dadurch gekennzeichnet**, daß
- zur Erhöhung der durch Mehrfachreflexion empfangbaren Leistung der Empfangssignale, neben den betreffenden Bereichen von Scheiben (F, SS1, VS2, HS1, HS2, H) als Schallspiegel wirkende - z.B. durch Metallflächen gebildete - Reflexionsflächen, die den Ultraschallstrom in die gewünschte Richtung weiterreflektieren, im KFZ-Innenraum angebracht sind.

9. Überwachungssystem nach einem der vorhergehenden Patentansprüche,
**dadurch** **gekennzeichnet,** daß
- beide Sendeelemente (S1, S2) im Betrieb Ultraschallimpulse mit einer bestimmten Frequenz oder mit einem Frequenzmuster abstrahlen.

10. Überwachungssystem nach Patentanspruch 9,
**dadurch gekennzeichnet**, daß
- im KFZ eine oder mehrere Steuerschaltungen angebracht sind,
° von welchen zumindest ein Teil jeweils den Betrieb der Sendeelemente (S1, S2) steuern und
° von welchen zumindest ein Teil jeweils die von dem Empfangselement (E1, E2) empfangenen Empfangssignale auswerten,
sowie
- die die Empfangssignale auswertende Steuerschaltung/-en einen Speicher zum Speichern von charakteristischen SOLLwerten über die betreffenden Empfangssignale - z.B. über deren Profil - , sowie eine Vergleicherschaltung zum Prüfen, ob die jeweiligen Empfangssignale - gemessen an dem / den gespeicherten SOLLwert/-en - eine einen Schwellwert überschreitende Abweichung aufweisen.

11. Überwachungssystem nach Patentanspruch 10,
**dadurch gekennzeichnet**, daß
- nach jeder erneuten Inbetriebnahme des Überwachungssystems mittels der Steuerschaltung/-en jeweils einer oder mehrere der SOLLwerte aus den dann anfänglich empfangenen Empfangssignalen abgeleitet und im Speicher gespeichert werden.

12. Überwachungssystem nach Patentanspruch 11,
**dadurch** **gekennzeichnet,** daß
- die Steuerschaltung/-en zumindest einen der gespeicherten SOLLwerte adaptiv bildet und dazu, zumindest von Zeit zu Zeit, einen oder mehrere neue SOLLwerte aus den dann empfangenen Empfangssignalen ableitet und im Speicher speichert.

13. Überwachungssystem nach einem der Patentansprüche 10 bis 12,
**dadurch** **gekennzeichnet,** daß
- die Vergleicherschaltung mittels eines oder mehreren SOLLwerten feststellt, ob sich inzwischen eine oder mehrere der Amplituden des Empfangssignales in für Alarmsituationen typischer Weise änderten.

14. Überwachungssystem nach einem der Patentansprüche 10 bis 13,
**dadurch** **gekennzeichnet,** daß
- die Vergleicherschaltung mittels eines oder mehreren SOLLwerten feststellt, ob sich inzwischen eine oder mehrere der Frequenzen des Empfangssignales in für Alarmsituationen typischer Weise änderten.

15. Überwachungssystem nach einem der Patentansprüche 10 bis 14,
**dadurch** **gekennzeichnet,** daß
- die Vergleicherschaltung mittels eines oder mehreren SOLLwerten feststellt, ob sich inzwischen die Laufzeit des Empfangssignales zwischen dem betreffenden Sendeelement und dem betreffenden Empfangselement in für Alarmsituationen typischer Weise änderte.

16. Überwachungssystem nach einem der vorhergehenden Patentansprüche,
bevorzugt nach einem der Patentansprüche 8 bis 14,
**dadurch** **gekennzeichnet,** daß
- es im Betrieb zumindest zeitweise den Dopplereffekt ausnutzt.

17. Überwachungssystem nach den Patentansprüchen 10 und 15,
**dadurch gekennzeichnet**, daß
- seine Steuerschaltung/-en im Betrieb nach Erkennen einer den Schwellwert überschreitenden Abweichung zusätzlich prüft / prüfen, ob auch eine auf dem Dopplereffekt beruhende Abweichung vorliegt.

## Claims

1. Ultrasonic monitoring system for the interior of a motor vehicle having side panes (SV1, SV2, HS1, HS2) and, at the front and at the rear, having lateral panes (F, H), thus having a front pane (F) and a rear pane (H), in which system
- two emission elements (S1, S2) - e.g. piezoelectric crystals (S1, S2) - which, in operation, emit at least at times ultrasound with a more or less marked directional characteristic, are secured in the motor vehicle interior and/or in the boundary thereof, and
- the main lobes of the directional characteristics of the emission elements (S1, S2) in the motor vehicle are oriented in different directions,
characterized in that
- only two emission elements (S1, S2) are fitted,
- at least one reception element (E1, E2) - e.g. likewise piezoelectric crystals (E1, E2) - but as a rule at least two mutually physically separate reception elements (E1, E2) are fitted in the motor vehicle interior and/or at the boundary thereof, which reception elements, in operation, receive at least at times components of the emitted ultrasound,
- the reception elements (E1, E2) are not formed at times by the emission elements (S1, S2), but are physically separate from all emission elements (S1, S2),
- after their activation, the two emission elements (S1, S2) are operated alternately with pauses, in such a manner
· that in each instance firstly only one of the emission elements (e.g. S1) emits an ultrasonic pulse, which is thereafter received by the reception element (E1) associated with this emission element (S1), and
· that only after this reception does the other emission element (S2) emit an ultrasound, which is thereafter received by the reception element (E2) associated with this emission element (S2), before the one of the emission elements (S1) again emits an ultrasonic pulse,
- the main lobes of the directional characteristics of the emission elements (S1, S2) and the main lobes of the space pattern/patterns of the reception element/elements (E1, E2) are oriented in such a manner
· that the reception element (E1) associated with the first emission element (S1) receives particularly clearly those emission signals of the first emission element (S1) which propagate by repeated reflections in each instance via a plurality of panes (VS1/VS2) in the interior of the motor vehicle, and
· that the reception element (E2) associated with the second emission element (S2) receives particularly clearly those emission signals of the second emission element (S2) which propagate by repeated reflections in each instance via a plurality of panes (HS1/HS2) in the interior of the motor vehicle (Figures 2 and 3).

2. Monitoring system according to Patent Claim 1, characterized in that
- the first emission element (S1) monitors, in conjunction with the first reception element (E1) associated with it (S1), preferentially more or less at least the one half of the interior of the motor vehicle, and
- the second emission element (S2) monitors, in conjunction with the second reception element (E2) associated with it (S2), preferentially more or less at least the other half of the interior of the motor vehicle (Figures 2 and 3).

3. Monitoring system according to Patent Claim 1 or 2, characterized in that
- the emission elements (S1, S2) and the reception elements (E1, E2) are fitted as mutually spatially separate elements in each instance at the or near the internal surface of the roof of the motor vehicle, and specifically more or less in the region of the spars situated between the front side panes (VS1, VS2) and the rear side panes (HS1, HS2) (between VS1/HS2 and VS2/HS1).

4. Monitoring system according to Patent Claim 1, 2 or 3, characterized in that
- the first emission element (S1) monitors, in conjunction with the first reception element (E1), preferentially the alarm-relevant regions of the front half of the interior of the motor vehicle, e.g. the front motor vehicle regions (VS1, F, VS2) close to the panes,
- the second emission element (S2) monitors, in conjunction with the second reception element (E2), preferentially the alarm-relevant regions of the rear half of the interior of the motor vehicle, e.g. the rear motor vehicle regions (VS1, F, VS2) close to the panes,
- to this end, the directional characteristic of the first emission element (S1) is oriented more or less towards the one front side pane (VS1) - e.g. towards the one adjacent to this first emission element (S1), and the directional characteristic of the first reception element (E1) is oriented more or less towards the other front side pane (VS2) situated on the other side of the motor vehicle - in these circumstances, the one adjacent to this first reception element (E1), so that the ultrasound emitted by the first emission element (S1), generated by repeated reflections, propagates at least to a considerable extent on the following path:
· firstly to that front side pane (VS1) towards which the directional characteristic of the first emission element (S1) is oriented,
· thereafter, at least in part to regions at and/or below the front pane (F),
· thereafter, at least in part to the opposite other front side pane (VS2), and
· thereafter, at least in part towards the first reception element (E1),
after which this first reception element (E1) evaluates the reception signal received by it (E1), and
- the directional characteristic of the second emission element (S2) is oriented more or less towards the one rear side pane (HS1) - e.g. towards the one adjacent to this second emission element (S2), and the directional characteristic of the second reception element (E2) is oriented more or less towards the other rear side pane (HS2) situated on the other side of the motor vehicle - in these circumstances, towards the one adjacent to this second reception element (E2), so that the ultrasound emitted by the second emission element (S2), generated by repeated reflections, propagates at least to a considerable extent on the following path:
· firstly to that rear side pane (HS1) towards which the directional characteristic of the second emission element (S2) is oriented,
· thereafter, at least in part to regions at and/or below the rear pane (H),
· thereafter, at least in part to the opposite other rear side pane (VS2), and
· thereafter, at least in part towards the second reception element (E2),
after which this second reception element (E2) evaluates the reception signal received by it (E2) (Figure 2).

5. Monitoring system according to Patent Claim 1, 2 or 3, characterized in that
- the first emission element (S1) monitors, in conjunction with the first reception element (E1), preferentially the alarm-relevant regions of the left-hand lateral half of the interior of the motor vehicle, e.g. preferentially its motor vehicle regions (F/left, VS2, HS1, H/left) close to the pane,
- the second emission element (S2) monitors, in conjunction with the second reception element (E2), preferentially the alarm-relevant regions of the right-hand lateral half of the interior of the motor vehicle, e.g. its rear motor vehicle regions (F/right, VS1, HS2, H/right) close to the panes,
- to this end, the directional characteristic of the first emission element (S1) is oriented more or less towards the left-hand half of one of the lateral panes (F/left) - e.g. of the front pane (F/left), and/or somewhat therebelow and/or somewhat thereabove, and the directional characteristic of the first reception element (E1) is oriented more or less towards the lefthand half of the other lateral pane (H/left) - in these circumstances, the rear pane (H/left) - so that the ultrasound emitted by the first emission element (S1), generated by repeated reflections, propagates at least to a considerable extent on the following path:
· firstly to that lateral pane (F/left) towards which the directional characteristic of the first emission element (S1) is oriented,
· thereafter, at least in part to and/or along at least one of the left-hand side panes (VS2, HS1),
· thereafter, at least in part to the other lateral pane (H/left), and
· thereafter, at least in part towards the first reception element (E1),
after which this first reception element (E1) evaluates the reception signal received by it (E1), and
- the directional characteristic of the second emission element (S2) is oriented more or less towards the right-hand half of one of the lateral panes (F/right) - e.g. the front pane (F/right), and/or somewhat there-below and/or somewhat thereabove, and the directional characteristic of the second reception element (E2) is oriented more or less towards the right-hand half of the other lateral pane (H/right) - in these circumstances, the rear pane (H/right) - so that the ultrasound emitted by the second emission element (S2), generated by repeated reflections, propagates at least to a considerable extent on the following path:
· firstly to that lateral pane (F/right) towards which the directional characteristic of the second emission element (S2) is oriented,
· thereafter, at least in part to and/or along at least one of the right-hand side panes (VS2, HS1),
· thereafter, at least in part to the other lateral pane (H/right), and
· thereafter, at least in part towards the second reception element (E2),
after which this second reception element (E2) evaluates the reception signal received by it (E2).

6. Monitoring system according to Patent Claim 4 or 5, characterized in that
- the emission elements (S1, S2) and the reception elements (E1, E2) are fitted in the region of the spars (VS2/HS1, VS1/HS2) so that their (S1, S2, E1, E2) directional characteristics intersect in each instance the centre line between the (left-hand and right-hand, or front and rear) motor vehicle lateral halves which are monitored to a large extent separately in each case, before they impinge upon those panes onto which they are directly oriented.

7. Monitoring system according to Patent Claim 4 or 5, characterized in that
- the emission elements (S1, S2) and the reception elements (E1, E2) are fitted in the region of the spars (VS1/HS1, VS1/HS2) so that their (S1, S2, E1, E2) directional characteristics impinge, in each instance, without intersecting the centre line between the (lefthand and right-hand, or front and rear) motor vehicle lateral halves which are monitored to a large extent separately in each case, upon those panes onto which they are directly oriented (Figure 2).

8. Monitoring system according to one of the preceding patent claims, characterized in that
- to increase that power of the reception signals which can be received by repeated reflection, in addition to the pertinent regions of panes (F, SS1, VS2, HS1, HS2, H) there are fitted, in the interior of the motor vehicle, reflecting surfaces which act as acoustic mirrors - e.g. formed by metal surfaces - and which further reflect the ultrasonic current in the desired direction.

9. Monitoring system according to one of the preceding patent claims, characterized in that
- in operation, the two emission elements (S1, S2) emit ultrasonic pulses with a specified frequency or with a frequency pattern.

10. Monitoring system according to Patent Claim 9, characterized in that
- in the motor vehicle there are fitted one or more control circuits,
· of which at least some control in each instance the operation of the emission elements (S1, S2), and
· of which at least some evaluate in each instance the reception signals received by the reception element (E1, E2),
and
- the control circuit/circuits evaluating the reception signals exhibit a memory for the storage of characteristic TARGET values concerning the pertinent reception signals - e.g. concerning their profile - as well as a comparator circuit to test whether the respective reception signals - measured with reference to the stored TARGET value/values - exhibit a deviation exceeding a threshold.

11. Monitoring system according to Patent Claim 10, characterized in that
- after each renewed activation of the monitoring system, by means of the control circuit/circuits, in each instance one or more of the TARGET values are derived from the then initially received reception signals and are stored in the memory.

12. Monitoring system according to Patent Claim 11, characterized in that
- the control circuit/circuits adaptively forms/form at least one of the stored TARGET values and, to this end, at least from time to time, derives/derive one or more new TARGET values from the then received reception signals and stores/store said new TARGET values in the memory.

13. Monitoring system according to one of Patent Claims 10 to 12, characterized in that
- the comparator circuit establishes, by means of one or more TARGET values, whether one or more of the amplitudes of the reception signal have meanwhile changed in a manner which is typical of alarm situations.

14. Monitoring system according to one of Patent Claims 10 to 13, characterized in that
- the comparator circuit establishes, by means of one or more TARGET values, whether one or more of the frequencies of the reception signal have meanwhile changed in a manner which is typical of alarm situations.

15. Monitoring system according to one of Patent Claims 10 to 14, characterized in that
- the comparator circuit establishes, by means of one or more TARGET values, whether the transit time of the reception signal between the pertinent emission element and the pertinent reception element has meanwhile changed in a manner which is typical of alarm situations.

16. Monitoring system according to one of the preceding patent claims,
preferably according to one of Patent Claims 8 to 14, characterized in that
- in operation, said system utilizes, at least at times, the Doppler effect.

17. Monitoring system according to Patent Claims 10 and 15, characterized in that
- in operation, after recognition of a deviation exceeding the threshold value, the control circuit/circuits of the system additionally tests/test whether a deviation based on the Doppler effect is also present.

## Revendications

1. Système de contrôle à ultrasons de l'habitacle d'un véhicule automobile comportant des vitres latérales (SV1, SV2, HS1, HS2) et des vitres transversales (F, H) situées en avant et en arrière, c'est-à-dire un pare-brise (F) et une vitre arrière (H), et dans lequel
- deux éléments d'émission (S1, S2) - par exemple des cristaux piézoélectriques (S1, S2) -, qui, en fonctionnement, émettent au moins par instants des ultrasons présentant une caractéristique directionnelle plus ou moins accusée, sont fixés dans l'habitacle du véhicule automobile et/ou au niveau de sa limite, et
- les lobes principaux des caractéristiques directionnelles des éléments d'émission (S1, S2) dans le véhicule automobile sont orientés dans des directions différentes,
caractérisé par le fait que
- seuls deux éléments d'émission (S1, S2) sont prévus,
- au moins un élément de réception (E1, E2) - par exemple également un cristal piézoélectrique (E1, E2) -, mais en général au moins deux éléments de réception (E1, E2) séparés l'un de l'autre dans l'espace, sont disposés dans l'habitacle du véhicule automobile et/ou au niveau de sa limite, ces éléments de réception recevant, en fonctionnement, au moins par instants des composantes des ultrasons émis,
- les éléments de réception (E1, E2) ne sont pas formés, par instants, par les éléments d'émission (S1, S2), mais sont séparés spatialement de tous les éléments d'émission (S1, S2),
- les deux éléments d'émission (S1, S2) fonctionnent, après leur mise en service, alternativement avec des pauses de telle sorte
. que respectivement au moins seul l'un des éléments d'émission (par exemple S1) émet une impulsion ultrasonore, qui est ensuite reçue par l'élément de réception (E1) associé à cet élément d'émission (S1), et
. que c'est seulement après cette réception, que l'autre élément d'émission (S2) émet des ultrasons qui sont reçus ensuite par l'élément de réception (E2) associé à cet élément d'émission (S2), avant que l'un des éléments d'émission (S1) émette à nouveau une impulsion ultrasonore,
- les lobes principaux des caractéristiques directionnelles des éléments d'émission (S1, S2) ainsi que les lobes principaux de la ou des caractéristiques directionnelles du ou des éléments de réception (E1, E2) sont orientés de telle sorte
. que l'élément de réception (E1) associé au premier élément d'émission (S1) reçoit d'une manière particulièrement nette les premiers signaux d'émission du premier élément d'émission (S1), qui se propagent dans l'habitacle du véhicule automobile, sous l'effet de réflexions multiples respectivement sur plusieurs vitres (VS1/VS2), et
. que l'élément de réception (E2) associé au second élément d'émission (S2) reçoit d'une manière particulièrement nette les signaux de réception du second élément d'émission (S2), qui se propagent, sous l'effet de réflexions multiples respectivement sur plusieurs vitres (HS1/HS2), dans l'habitacle du véhicule automobile (figures 2 et 3).

2. Système de contrôle suivant la revendication 1, caractérisé par le fait que
- le premier élément d'émission (S1) contrôle de préférence plus ou moins, et conjointement avec le premier élément de réception (E1) qui lui est associé, au moins une moitié de l'habitacle du véhicule automobile, et
- le second élément d'émission (S2) contrôle de préférence plus ou moins, et conjointement avec le second élément de réception (E2) qui lui est associé, au moins l'autre moitié de l'habitacle du véhicule automobile (figures 2 et 3).

3. Système de contrôle suivant la revendication 1 ou 2, caractérisé par le fait que
- les éléments d'émission (S1, S2) et les éléments de réception (E1, E2) sont réalisés sous la forme d'éléments séparés dans l'espace et situés respectivement sur ou à proximité de la surface intérieure du toit du véhicule automobile, et ce plus ou moins dans la zone des montants situés entre les vitres latérales avant (VS1, VS2) et les vitres latérales arrière (HS1, HS2) (entre VS1/HS2 et VS2/HS1).

4. Système de contrôle suivant la revendication 1, 2 ou 3, caractérisé par le fait que
- le premier élément d'émission (S1) contrôle, conjointement avec le premier élément de réception (E1), de préférence les zones, qui sont importantes pour l'alarme, de la moitié avant de l'habitacle du véhicule automobile, par exemple les zones avant (VS1, F, VS2) du véhicule automobile, qui sont proches des vitres,
- le second élément d'émission (S2) contrôle, conjointement avec le second élément de réception (E2), de préférence les zones, qui sont importantes du point de vue de l'alarme, de la moitié arrière de l'habitacle du véhicule automobile, par exemple les zones arrière (VS1, F, VS2) du véhicule automobile, qui sont proches des vitres,
- à cet effet, la caractéristique directionnelle du premier d'élément d'émission (S1) est orientée plus ou moins en direction d'une vitre latérale avant (VS1) - par exemple en direction de la vitre latérale voisine de ce premier élément d'émission (S1) -, et la caractéristique directionnelle du second élément de réception (E1) est dirigée plus ou moins en direction de l'autre vitre latérale avant (VS2) - c'est-à-dire en direction de la vitre avant voisine de ce premier élément de réception (E1) -, située sur l'autre côté du véhicule automobile, de sorte que les ultrasons émis par le premier élément d'émission (S1) se propagent, d'une manière due à des réflexions multiples, au moins pour une majeure partie sur le trajet suivant :
. tout d'abord en direction de la vitre latérale avant (VS1), vers laquelle est dirigée la caractéristique directionnelle du premier élément d'émission (S1),
. ensuite, au moins en partie vers des zones situées à proximité de et/ou au-dessous du pare-brise (F),
. ensuite au moins en partie en direction de l'autre vitre latérale avant (VS2) opposée à la précédente, et
. au moins en partie en direction du premier élément de réception (E1),
à la suite de quoi ce premier élément de réception (E1) évalue le signal de réception qu'il reçoit, et
- la caractéristique directionnelle du second élément d'émission (S2) est orientée plus ou moins en direction d'une vitre latérale arrière (HS1) - par exemple en direction de la vitre latérale voisine de ce second élément d'émission (S2) -, et la caractéristique directionnelle du second élément de réception (E2) est dirigée plus ou moins en direction de l'autre fenêtre latérale arrière (HS2) - c'est-à-dire en direction de la vitre arrière voisine de ce second élément de réception (E2) -, située sur l'autre côté du véhicule automobile, de sorte que les ultrasons émis par le second élément d'émission (S2) se propagent, d'une manière due à des réflexions multiples, au moins pour une majeure partie sur le trajet suivant :
. tout d'abord en direction de la vitre latérale arrière (HS1), vers laquelle est dirigée la caractéristique directionnelle du second élément d'émission (S2),
. ensuite, au moins en partie vers des zones situées à proximité de et/ou au-dessous de la vitre arrière (H),
. ensuite au moins en partie en direction de l'autre vitre latérale arrière (VS2) opposée à la précédente, et
. au moins en partie en direction du second élément de réception (E2),
à la suite de quoi ce second élément de réception (E2) évalue le signal de réception qu'il reçoit (figure 2).

5. Dispositif de contrôle suivant la revendication 1, 2 ou 3, caractérisé par le fait que
- le premier élément d'émission (S1) contrôle de préférence, en association avec le premier élément de réception (E1), les zones, qui sont importantes pour l'alarme, de la moitié latérale gauche de l'habitacle du véhicule automobile, par exemple de préférence ses zones proches des vitres (F/gauche, VS2, HS1, H/gauche),
- le second élément d'émission (S2) contrôle de préférence, conjointement avec le second élément de réception (E2), les zones, qui sont importantes pour l'alarme, de la seconde moitié latérale de l'habitacle du véhicule automobile, par exemple ses zones arrière proches des vitres (F/droite, VS1, HS2, H/droite),
- à cet effet, la caractéristique directionnelle du premier élément d'émission (S1) est orientée plus ou moins en direction de la moitié gauche de l'une des vitres transversales (F/gauche) - par exemple le pare-brise (F/gauche) et/ou légèrement au-dessous et/ou légèrement au-dessus, et la caractéristique directionnelle du premier élément de réception (E1) est orientée plus ou moins en direction de la moitié gauche de l'autre vitre transversale (H/gauche) - alors la fenêtre arrière (H/gauche) - de sorte que les ultrasons émis par le premier élément d'émission (S1) se propagent, d'une manière due à des réflexions multiples, au moins pour une partie importante, sur le trajet suivant :
. tout d'abord en direction de la vitre transversale (F/gauche), vers laquelle est dirigée la caractéristique directionnelle du premier élément d'émission (S1),
. ensuite au moins en partie en direction et/ou le long d'au moins l'une des vitres latérales gauches (VS2, HS1),
. ensuite au moins partiellement en direction de l'autre vitre transversale (H/gauche), et
. ensuite au moins partiellement en direction du premier élément de réception (E1),
. à la suite de quoi ce premier élément de réception (El) évalue le signal de réception qu'il reçoit, et
- la caractéristique directionnelle du second élément d'émission (S2) est orientée plus ou moins en direction de la moitié droite de l'une des vitres transversales (F/droite) - par exemple le pare-brise (H/droite), et/ou légèrement au-dessous et/ou légèrement au-dessus, ainsi que la caractéristique directionnelle du second élément de réception (E2) plus ou moins en direction de la moitié droite de l'autre vitre transversale (H/droite) - ensuite la vitre arrière (H/droite) -, de sorte que les ultrasons émis par le second élément d'émission (S2) se propagent, d'une manière provoquée par des réflexions multiples, pour au moins une grande partie, sur le trajet suivant :
. d'abord en direction de la vitre transversale (F/droite), vers laquelle est dirigée la caractéristique directionnelle du second élément d'émission (S2),
. ensuite au moins en partie en direction et/ou le long d'au moins l'une des deux vitres latérales de droite (VS2, HS1),
. ensuite au moins en partie en direction de l'autre vitre transversale (H/droite), et
. ensuite au moins en partie dans la direction du second élément de réception (E2),
. à la suite de quoi ce second élément de réception (E2) évalue le signal de réception qu'il reçoit.

6. Système de contrôle suivant la revendication 4 ou 5, caractérisé par le fait que
- les éléments d'émission (S1, S2) et les éléments de réception (E1, E2) sont disposés dans la zone des montants (VS2/HS1, VS1/HS2) de telle sorte que leurs caractéristiques directionnelles (S1, S2, E1, E2) coupent respectivement la ligne médiane entre les moitiés latérales du véhicule automobile (gauche et droite ou avant et arrière) qui sont en soi contrôlées dans une large mesure séparément, avant de rencontrer les vitres, sur lesquelles ils sont directement dirigés.

7. Système de contrôle suivant la revendication 4 ou 5, caractérisé par le fait que
- les éléments d'émission (S1, S2) et les éléments de réception (E1, E2) sont disposés dans la zone des montants (VS2/HS1, VS1/HS2) de telle sorte que leurs caractéristiques directionnelles (S1, S2, E1, E2) rencontrent respectivement sans croiser la ligne médiane entre les moitiés latérales du véhicule automobile (gauche et droite ou avant et arrière) contrôlées en soi dans une large mesure séparément, sur les vitres, sur lesquelles ils sont directement dirigés (figure 2).

8. Système de contrôle suivant l'une des revendications précédentes, caractérisé par le fait que
- pour accroître la puissance, des signaux de réception, qui peut être reçue sous l'effet de réflexions multiples, des surfaces réfléchissantes, qui agissent en tant que réflecteurs acoustiques - formées par exemple dans des surfaces métalliques et qui réfléchissent le faisceau d'ultrasons dans la direction désirée, sont disposées dans l'habitacle du véhicule automobile, prés des zones considérées de vitres (F, VS1, VS2, HS1, HS2, H).

9. Système de contrôle suivant l'une des revendications précédentes, caractérisé par le fait que
- en fonctionnement, les deux éléments d'émission (S1, S2) émettent des impulsions ultrasonores possédant une fréquence déterminée ou un modèle de fréquence.

10. Système de contrôle suivant la revendication 9, caractérisé par le fait que
- dans le véhicule automobile sont prévus un ou plusieurs circuits de commande;
. dont au moins une partie commande respectivement le fonctionnement des éléments d'émission (S1, S2), et
. dont au moins une partie évalue respectivement les signaux de réception reçus par l'élément de réception (E1, E2), et
- le ou les circuits de commande, qui évaluent les signaux de réception, comportent une mémoire servant à mémoriser des valeurs caractéristiques de consigne concernant les signaux de réception considérés - par exemple concernant leur profil -, ainsi qu'un circuit comparateur pour vérifier si les signaux de réception respectifs - mesurés au niveau de la/des valeurs de consigne mémorisées - possèdent un écart qui dépasse une valeur de seuil.

11. Système de contrôle suivant la revendication 10, caractérisé par le fait que
- après chaque nouvelle mise en service du système de contrôle, au moyen du ou des circuits de commande respectivement une ou plusieurs des valeurs de consigne sont dérivés des signaux de réception reçus alors initialement et sont mémorisés dans la mémoire.

12. Système de contrôle suivant la revendication 11, caractérisé par le fait que
- le ou les circuits de commande forment, d'une manière adaptative, au moins l'une des valeurs de consigne mémorisées et à cet effet, au moins de temps à autres, dérivent une ou plusieurs nouvelles valeurs de consigne à partir des signaux de réception alors reçus et les mémorisent dans la mémoire.

13. Système de contrôle suivant l'une des revendications 10 à 12, caractérisé par le fait que
- le circuit comparateur détermine au moyen d'une ou de plusieurs valeurs de consigne, si entre-temps une ou plusieurs des amplitudes du signal de réception ont changé d'une manière typique pour des situations d'alarme.

14. Système de contrôle suivant l'une des revendications 10 à 13, caractérisé par le fait que
- le circuit comparateur détermine, au moyen d'une ou de plusieurs valeurs de consigne, si entre-temps une ou plusieurs des fréquences du signal de réception a varié d'une manière typique pour des situations d'alarme.

15. Système de contrôle suivant l'une des revendications 10 à 14, caractérisé par le fait que
- le circuit comparateur détermine, au moyen d'une ou de plusieurs valeurs de consigne, si entre-temps le temps de propagation du signal de réception entre l'élément d'émission considéré et l'élément de réception considéré, a changé d'une manière typique pour des situations d'alarme.

16. Système de contrôle suivant l'une des revendications précédentes,
de préférence suivant l'une des revendications 8 et 14,
caractérisé par le fait que
- on utilise en fonctionnement l'effet Doppler au moins par instants.

17. Système de contrôle suivant l'une des revendications 10 et 15, caractérisé par le fait que
- en fonctionnement son ou ses circuits de commande vérifient, en supplément, après identification d'un écart dépassant la valeur de consigne, s'il existe également un écart basé sur l'effet Doppler.
